# EUROPEAN PATENT APPLICATION

(11) **EP 4 775 550 A1**
(43) Date of publication of application: **15.07.2026**
(21) Application number: 24874081.3
(22) Date of filing: 30.09.2024
(51) Int. Cl.: C03B 23/023

(54) **GLASS, GLASS FORMING METHOD, AND GLASS FORMING DEVICE**

(30) Priority: 07.10.2023 CN 202311285043
(71) Applicant: Fuyao Glass Industry Group Co., Ltd., Fuqing, Fujian 350300 (CN)
(72) Inventor: WANG, Hongfei, Fuzhou, Fujian 350300 (CN); ZHAN, Zhiyu, Fuzhou, Fujian 350300 (CN)
(74) Representative: Mewburn Ellis LLP
(86) International application number: PCT/CN2024/122755
(87) International publication number: WO 2025/073264

(57) **Abstract**

A glass, a glass forming method, and a glass forming device are provided in the disclosure. The glass has a first surface and a second surface opposite to the first surface, and the first surface is provided with an infrared reflective film layer. The glass forming method includes the following. Heating is performed on the glass. Bend-forming is performed on the glass. Air-quenching is performed on the glass to make both a surface compressive stress of the first surface of the glass and a surface compressive stress of the second surface of the glass greater than or equal to 30MPa. An air pressure of an air blast applied to a side of the first surface of the glass is lower than an air pressure of an air blast applied to a side of the second surface of the glass. The glass forming method provided in the disclosure can produce the glass in which both a surface compressive stress of the first surface and a surface compressive stress of the second surface opposite to the first surface are greater than or equal to 30Mpa.

## Description

This application claims priority to Chinese Patent Application No. 202311285043.4, filed October 7, 2023, and entitled "GLASS, GLASS FORMING METHOD, AND GLASS FORMING DEVICE", the entire disclosure of which is incorporated herein by reference.

### TECHNICAL FIELD

The present disclosure relates to the field of vehicle glass, and in particular, to a glass, a glass forming method, and a glass forming device.

### BACKGROUND

With increasing functional demands for vehicles, panoramic laminated and coated sunroofs have become a trend for vehicle sunroofs. The panoramic laminated and coated sunroofs can enhance visibility and in-vehicle comfort for passengers. To ensure the safety of vehicle occupants, it is necessary to increase the surface strength of the laminated and coated glass.

However, the surface compressive stress of existing mass-produced coated sunroof products fails to meet customer requirements. The main reason is as follows. A glass surface is coated with a film layer, predominantly a silver layer, which is a good thermal conductor. During the cooling process, the film layer cools and solidifies first. As an inner glass is a poor thermal conductor, the cooling of the inner glass lags behind that of the film layer. The film layer exerts mechanical stress on the inner glass, leading to an increase in tensile stress in the inner glass and an increase in compressive stress in the film layer. Consequently, this results in a decrease of stress on a non-coated glass surface.

### SUMMARY

In a first aspect, a glass is provided in the disclosure. The glass has a first surface and a second surface opposite to the first surface. The first surface is provided with an infrared reflective film layer. The first surface has a first surface compressive stress, the second surface has a second surface compressive stress, and both the first surface compressive stress and the second surface compressive stress are greater than or equal to 30MPa.

The first surface compressive stress is greater than or equal to 34MPa, and the second surface compressive stress is greater than or equal to 34MPa.

A ratio of an absolute value of a difference between the first surface compressive stress and the second surface compressive stress to the first surface compressive stress is less than or equal to 5%.

The glass is a transparent glass or an ultra-transparent glass.

In the glass provided in the disclosure, the surface compressive stress of the first surface and the surface compressive stress of the second surface opposite to the first surface are both greater than or equal to 30MPa, resulting in high overall strength of the glass, and thus meeting customer requirements.

In a second aspect, a glass forming method is provided in the disclosure. A glass has a first surface and a second surface opposite to the first surface. The first surface is provided with an infrared reflective film layer. The glass forming method includes the following. Heating is performed on the glass. Bend-forming is performed on the glass. Air-quenching is performed on the glass to make both a surface compressive stress of the first surface of the glass and a surface compressive stress of the second surface of the glass greater than or equal to 30MPa. An air pressure of an air blast applied to a side of the first surface of the glass is lower than an air pressure of an air blast applied to a side of the second surface of the glass.

Air-quenching is performed on the glass to make both the surface compressive stress of the first surface of the glass and the surface compressive stress of the second surface of the glass greater than or equal to 30MPa as follows. A first air blast having a first air pressure to the first surface is applied. A second air blast having a second air pressure to the second surface is applied. A ratio of the first air pressure to the second air pressure is in a range of 1/1.3 - 1/3.

The first air pressure is in a range of 2kPa - 8kPa, and the second air pressure is in a range of 2kPa - 8kPa.

Heating is performed on the glass as follows. Radiant heating is performed on the first surface of the glass, and/or convective heating is performed on the first surface and/or the second surface of the glass.

Bend-forming is performed on the glass as follows. Bend-forming is performed on the glass and heat preservation is performed on the glass during performing bend-forming on the glass, to cause a temperature of the glass subjected to bend-forming to be above 580°C.

Heat preservation is performed on the glass during performing bend-forming on the glass as follows. Heat preservation is performed on the glass through convective heating during performing bend-forming on the glass. A temperature of convective heating is greater than or equal to 400°C.

The disclosure provides the glass forming method. During performing air-quenching on the glass, the air pressure of the air blast applied to the first surface provided with the infrared reflective film layer is lower than the air pressure of the air blast applied to the second surface, thereby relatively reducing the cooling rate of the first surface. In this way, the cooling rate of the first surface and the cooling rate of the second surface are balanced, thereby reducing or even eliminating the difference in surface compressive stress between the first surface and the second surface of the glass subjected to cooling, which improves the surface strength of the glass subjected to cooling, with both the surface compressive stress of the first surface and the surface compressive stress of the second surface being greater than or equal to 30MPa. Therefore, the glass forming method provided in the disclosure can produce the glass in which both the surface compressive stress of the first surface and the surface compressive stress of the second surface opposite to the first surface are greater than or equal to 30MPa.

In a third aspect, a glass forming device is provided in the disclosure. The glass forming device includes a heating apparatus, a bend-forming apparatus, and an air-cooling apparatus. The heating apparatus is configured to perform heating on a glass. The bend-forming apparatus is disposed downstream of the heating apparatus, and the bend-forming apparatus is configured to perform bend-forming on the glass. The air-cooling apparatus is disposed downstream of the bend-forming apparatus. The air-cooling apparatus is configured to perform air-quenching on the glass to make both a surface compressive stress of a first surface of the glass and a surface compressive stress of a second surface of the glass greater than or equal to 30MPa. The air-cooling apparatus is configured to apply an air blast to the first surface and apply an air blast to the second surface opposite to the first surface. An air pressure of the air blast applied by the air-cooling apparatus to the first surface is lower than an air pressure of the air blast applied by the air-cooling apparatus to the second surface.

The air-cooling apparatus includes a first air grid and a second air grid spaced apart from and opposite to the first air grid. A gap between the first air grid and the second air grid is configured to accommodate the glass. The first air grid is configured to apply a first air blast having a first air pressure to the first surface. The second air grid is configured to apply a second air blast having a second air pressure to the second surface. A ratio of the first air pressure to the second air pressure is in a range of 1/1.3 - 1/3.

A distance between the first air grid and the first surface is a first distance. A distance between the second air grid and the second surface is a second distance. The first distance is greater than the second distance.

The first distance is in a range of 50mm - 80mm, and the second distance is in a range of 40mm - 60mm.

The heating apparatus includes a heating furnace, a conveying apparatus, and a first heating source. The conveying apparatus is disposed in the heating furnace and is configured to carry the glass for movement within the heating furnace. The first heating source is disposed in the heating furnace and is configured to perform radiant heating on the first surface of the glass. And/or the heating apparatus further includes a second heating source. The second heating source is disposed in the heating furnace and is configured to perform convective heating on the first surface and/or the second surface of the glass.

The bend-forming apparatus includes an upper forming mold and a lower forming mold opposite to the upper forming mold, and the glass is bend-formed between the upper forming mold and the lower forming mold. The bend-forming apparatus further includes a heat preservation and heating system. The heat preservation and heating system is configured to perform heat preservation and heating on the glass located between the upper forming mold and the lower forming mold, to cause a temperature of the glass subjected to bend-forming to be above 580°C.

The heat preservation and heating system includes a third heating source. The third heating source is disposed at an edge of the upper forming mold and is configured to perform convective heating on the glass located between the upper forming mold and the lower forming mold, and a temperature of the convective heating is greater than or equal to 400°C.

The glass forming device provided in the disclosure is configured to perform heating, bend-forming, and cooling on the glass, so that both the surface compressive stress of the first surface of the glass and the surface compressive stress of the second surface of the glass are greater than or equal to 30MPa. This is beneficial for improving the overall strength of the glass to meet customer requirements.

### BRIEF DESCRIPTION OF THE DRAWINGS

In order to describe technical solutions in the related art or embodiments of the disclosure more clearly, the following will give a brief introduction to the accompanying drawings required for describing the related art or embodiments. Apparently, the accompanying drawings hereinafter described are merely some embodiments of the disclosure. Based on these drawings, those of ordinary skill in the art can also obtain other drawings without creative effort.
FIG. 1 is a flowchart of a glass forming method according to an embodiment of the disclosure.
FIG. 2 is a schematic structural view illustrating performing heating on the glass in the embodiment of FIG. 1.
FIG. 3 is a schematic structural view illustrating performing bend-forming on the glass in the embodiment of FIG. 1.
FIG. 4 is a schematic structural view illustrating performing air-quenching on the glass in the embodiment of FIG. 1.
FIG. 5 is a schematic structural view of the glass prepared in the embodiment of FIG. 1.
FIG. 6 is a flowchart of performing air-quenching on the glass in FIG. 1.
FIG. 7 is a flowchart of performing heating on a glass substrate in FIG. 1.
FIG. 8 is a flowchart of performing bend-forming on the glass in FIG. 1.
FIG. 9 is a flowchart of applying a hot air blast to the glass in FIG. 8.
FIG. 10 illustrates a glass forming device according to an embodiment of the disclosure.

Reference signs: glass 10; first surface 111; second surface 112; infrared reflective film layer 12; glass forming device 30; heating apparatus 31; first heating source 311; second heating source 312; convective air outlet 3121; heating furnace 313; conveying apparatus 314; bend-forming apparatus 32; upper forming mold 321; lower forming mold 322; air-cooling apparatus 33; first air grid 331; second air grid 332; heat preservation and heating system 34; third heating source 341.

### DETAILED DESCRIPTION

The following will clearly and comprehensively illustrate technical solutions of embodiments of the disclosure with reference to the accompanying drawings of embodiments of the disclosure. Apparently, the embodiments described herein are merely some embodiments, rather than all embodiments, of the disclosure. Based on the embodiments of the disclosure, all other embodiments obtained by those of ordinary skill in the art without creative effort shall fall within the protection scope of the disclosure.

The terms "first", "second", and the like in the specification, claims, and the above accompanying drawings of the present disclosure are used for distinguishing different objects, rather than for describing a specific order. In addition, the terms "include", "have", and any variations thereof are intended to cover non-exclusive inclusions. For example, a process, method, system, product, or apparatus that includes a series of steps or units is not limited to the listed steps or units, but optionally further includes steps or units not listed, or optionally further includes other steps or units inherent to the process, method, product, or apparatus.

Reference herein to "embodiment" or "implementation" means that a particular feature, structure, or characteristic described in connection with embodiments or implementations can be included in at least one embodiment of the disclosure. The appearances of this phrase in various places in the specification are not necessarily all referring to the same embodiment, nor are separate or alternative embodiments mutually exclusive of other embodiments. It is apparently and implicitly understood by those of ordinary skill in the art that the embodiments described herein can be combined with other embodiments.

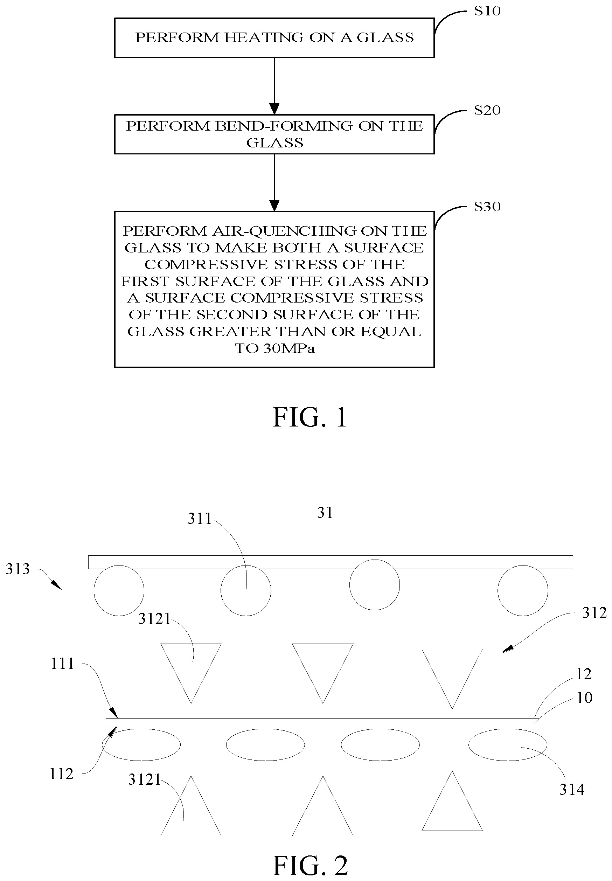

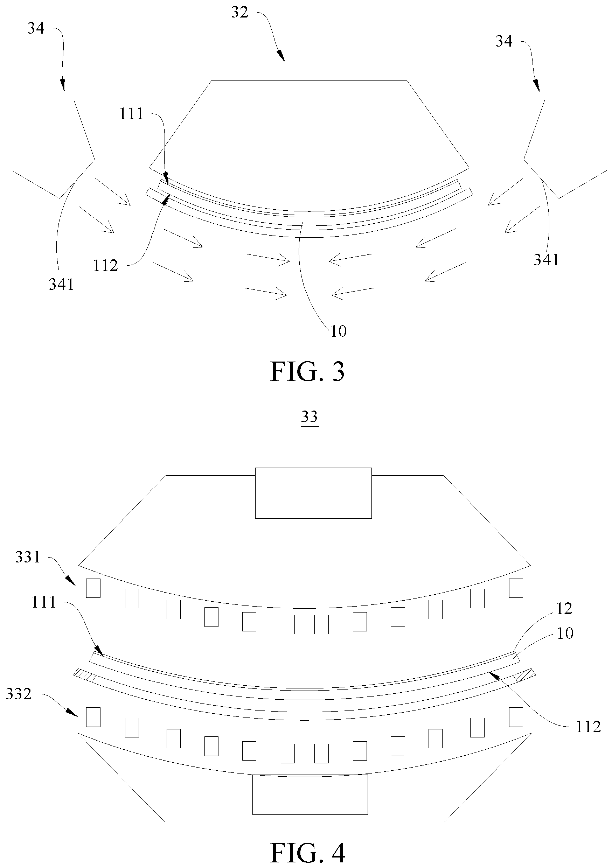

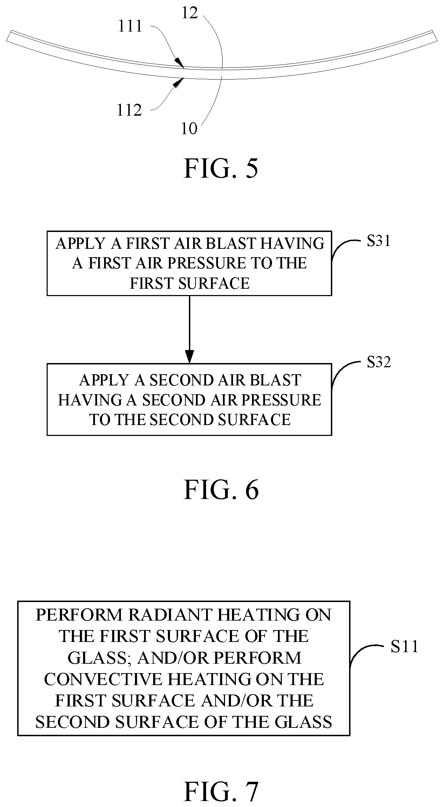

The disclosure provides a glass forming method. Reference is made to FIG. 1 - FIG. 5. FIG. 1 is a flowchart of a glass forming method according to an embodiment of the disclosure. FIG. 2 is a schematic structural view illustrating performing heating on the glass in the embodiment of FIG. 1. FIG. 3 is a schematic structural view illustrating performing bend-forming on the glass in the embodiment of FIG. 1. FIG. 4 is a schematic structural view illustrating performing air-quenching on the glass in the embodiment of FIG. 1. FIG. 5 is a schematic structural view of the glass prepared in the embodiment of FIG. 1. In this embodiment, the glass forming method includes operations at S10, S20, and S30, with specific operations as follows.

At S10, perform heating on a glass 10.

In this embodiment, the glass 10 has a first surface 111 and a second surface 112 opposite to the first surface 111, and the first surface 111 is provided with an infrared reflective film layer 12. A first heating source 311 is used to heat the glass 10 to a preset temperature to facilitate subsequent bend-forming on the glass 10.

The preset temperature is in a range of 640°C - 650°C. For example, the preset temperature may be, but is not limited to, 640°C, 642°C, 644°C, 646°C, 648°C, 650°C, or another temperature within the range of 640°C - 650°C.

Optionally, the first heating source 311 is disposed on a side of the first surface 111 of the glass 10, or disposed on a side of the second surface 112 of the glass 10, or disposed on both opposite sides of the glass 10.

Optionally, the infrared reflective film layer 12 is a metal layer. For example, the infrared reflective film layer 12 may be, but is not limited to, a silver layer, a silver alloy layer, or the like.

At S20, perform bend-forming on the glass 10.

In this embodiment, after the glass 10 is heated to the preset temperature, bending-forming is performed on the glass 10, so that the glass 10 subjected to bend-forming has a shape suitable for use in vehicles. For example, it can be applied to sunroofs, front windshields, side windows, etc.

At S30, perform air-quenching on the glass 10 to make both a surface compressive stress of the first surface 111 of the glass 10 and a surface compressive stress of the second surface 112 of the glass 10 greater than or equal to 30MPa.

In this embodiment, the air pressure of the air blast applied to a side of the first surface 111 of the glass 10 is lower than the air pressure of the air blast applied to a side of the second surface 112 of the glass 10, so that the cooling rate of the first surface 111 and the cooling rate of the second surface 112 are balanced. Specifically, since the infrared reflective film layer 12 cools faster than the glass 10, and the infrared reflective film layer 12 is disposed on the first surface 111, if the air pressure of the air blast applied to a side of the first surface 111 is equal to the air pressure of the air blast applied to a side of the second surface 112, the cooling rate of the first surface 111 will be greater than the cooling rate of the second surface 112. This causes the first surface 111 to exert mechanical stress to the interior of the glass 10, increasing the tensile stress of the interior of the glass 10. Consequently, the compressive stress generated on the first surface 111 increases, leading to a decrease in the compressive stress on the second surface 112. In this embodiment, the air pressure of the air blast applied to a side of the first surface 111 is set to be lower than the air pressure of the air blast applied to a side of the second surface 112, so that the cooling rate of the infrared reflective film layer 12 is relatively reduced, thereby balancing the cooling rate of the first surface 111 and the cooling rate of the second surface 112. As a result, for the glass 10 subjected to cooling, the surface compressive stress of the first surface 111 and the surface compressive stress of the second surface 112 are approximately the same, and are both greater than or equal to 30MPa, thereby improving the surface strength of the glass 10.

Relatively reducing the cooling rate of the infrared reflective film layer 12 refers to reducing the cooling rate of the infrared reflective film layer 12 relative to the cooling rate of the second surface 112. That is, the cooling rate of the first surface 111 can be reduced, and/or the cooling rate of the second surface 112 can be increased.

To sum up, the disclosure provides the glass forming method. During performing air-quenching on the glass 10, the air pressure of the air blast applied to the first surface 111 provided with the infrared reflective film layer 12 is lower than the air pressure of the air blast applied to the second surface 112, thereby relatively reducing the cooling rate of the first surface 111. In this way, the cooling rate of the first surface 111 and the cooling rate of the second surface 112 are balanced, consequently reducing or even eliminating the difference in surface compressive stress between the first surface 111 and the second surface 112 of the glass 10 subjected to cooling, which improves the surface strength of the glass 10 subjected to cooling, with both the surface compressive stress of the first surface and the surface compressive stress of the second surface being greater than or equal to 30MPa. Therefore, the glass forming method provided in the disclosure can produce the glass 10 in which both the surface compressive stress of the first surface 111 and the surface compressive stress of the second surface 112 opposite to the first surface 111 are greater than or equal to 30MPa.

Reference is made to FIG. 4 and FIG. 6. FIG. 6 is a flowchart of performing air-quenching on the glass in FIG. 1. In this embodiment, the aforementioned operation at S30 includes operations at S31 and S32, which are described in detail below.

At S31, apply a first air blast having a first air pressure to the first surface 111.

At S32, apply a second air blast having a second air pressure to the second surface 112.

In this embodiment, air grids are disposed to cool the glass 10. Specifically, the glass 10 is disposed between a first air grid 331 and a second air grid 332, with the first surface 111 facing the first air grid 331 and the second surface 112 facing the second air grid 332. The first air grid 331 applies cold air to the first surface 111, and the second air grid 332 applies cold air to the second surface 112. It may be noted that, the operations at S31 and S32 are performed simultaneously.

In this embodiment, a ratio of the first air pressure to the second air pressure is in a range of 1/1.3 - 1/3, so that the cooling rate of the infrared reflective film layer 12 is relatively reduced, thereby balancing the cooling rate of the first surface 111 and the cooling rate of the second surface 112. Consequently, for the glass 10 subjected to cooling, the surface compressive stress of the first surface 111 and the surface compressive stress of the second surface 112 are approximately the same, and thus the surface strength of the glass 10 is improved. For example, the ratio of the first air pressure to the second air pressure may be, but is not limited to, 1/1.3, 1/1.7, 1/1.9, 1/2.1, 1/2.3, 1/2.5, 1/2.7, 1/3, or another value within the range of 1/1.3 - 1/3. If the ratio of the first air pressure to the second air pressure is less than 1/1.3, the cooling of the first surface 111 becomes too fast, which may cause the first surface 111 to exert mechanical stress to the interior of the glass 10, thereby increasing the tensile stress of the interior of the glass 10. As a result, the compressive stress generated on the first surface 111 increases, leading to a decrease in the compressive stress on the second surface 112. If the ratio of the first air pressure to the second air pressure is greater than 1/3, the cooling of the second surface 112 becomes too fast during the cooling of the glass 10. This may cause uneven cooling between the first surface 111 and the second surface 112, which may readily cause cracking or displacement in the glass 10. Therefore, the ratio of the first air pressure to the second air pressure being in the range of 1/1.3 - 1/3 can relatively reduce the cooling rate of the infrared reflective film layer 12, thereby balancing the cooling rate of the first surface 111 and the cooling rate of the second surface 112. Thus, for the glass 10 subjected to cooling, the surface compressive stress of the first surface 111 and the surface compressive stress of the second surface 112 are approximately the same, thereby improving the surface strength of the glass 10. In some embodiments, in order to enable the surface compressive stress of the glass 10 to achieve a higher qualification rate, the ratio of the first air pressure to the second air pressure is preferably in a range of 1/1.5 - 1/3.

In this embodiment, the ratio of the first air pressure to the second air pressure is in the range of 1/1.3 - 1/3, so that both the surface compressive stress of the first surface 111 and the surface compressive stress of the second surface 112 of the glass 10 subjected to cooling are greater than or equal to 34MPa. In some further embodiments, both the surface compressive stress of the first surface 111 and the surface compressive stress of the second surface 112 are greater than or equal to 34.4MPa, and a ratio of an absolute value of a difference between the surface compressive stress of the first surface 111 and the surface compressive stress of the second surface 112 to the surface compressive stress of the first surface 111 is less than or equal to 5%.

Optionally, a distance between the first air grid 331 and the first surface 111 is a first distance, and a distance between the second air grid 332 and the second surface 112 is a second distance. The first distance is greater than the second distance. The first distance is in a range of 50mm - 80mm, and the second distance is in a range of 40mm - 60mm. In this way, the cooling rate of the first surface 111 and the cooling rate of the second surface 112 may be further balanced, thereby further reducing or even eliminating the difference in surface compressive stress between the first surface 111 and the second surface 112 of the glass 10 subjected to cooling, and improving the surface strength of the cooled glass 10. For example, the first distance may be, but is not limited to, 50mm, 60mm, 70mm, 80mm, or another value within the range of 50mm - 80mm. The second distance may be, but is not limited to, 40mm, 45mm, 50mm, 60mm, or another value within the range of 40mm - 60mm.

Optionally, the first air pressure is in a range of 2kPa - 8kPa, and the second air pressure is in a range of 2kPa - 8kPa, which is beneficial for rapid cooling of the glass 10. For example, the first air pressure may be, but is not limited to, 2kPa, 4kPa, 6kPa, 8kPa, or another value within the range of 2kPa - 8kPa. The second air pressure may be, but is not limited to, 2kPa, 4kPa, 6kPa, 8kPa, or another value within the range of 2kPa - 8kPa.

Reference is made to FIG. 2 and FIG. 7. FIG. 7 is a flowchart of performing heating on a glass substrate in FIG. 1. In this embodiment, the aforementioned operation at S10 includes an operation at S11, which is described in detail below.

At S11, perform radiant heating on the first surface 111 of the glass 10; and/or perform convective heating on the first surface 111 and/or the second surface 112 of the glass 10.

In this embodiment, a first heating source 311 having thermal radiation is used to radiate heat toward the first surface 111 to heat the glass 10; and/or a second heating source 312 is used to perform convective heating on the first surface 111 and/or the second surface 112 of the glass 10. For example, the first heating source 311 may be, but is not limited to, a heating wire, an incandescent lamp, a halogen tungsten lamp, or the like. The second heating source 312 is a convective heating apparatus.

In this embodiment, the first heating source 311 is disposed on a side of the first surface 111. Since the first surface 111 is provided with the infrared reflective film layer 12 and the infrared reflective film layer 12 is a good conductor of heat, the heating effect of the first heating source 311 on the glass 10 can be improved.

In this embodiment, since the infrared reflective film layer 12 can reflect radiant heat, the first surface 111 tends to remain at a relatively low temperature during heating. Therefore, providing convective hot air to a side of the first surface 111 and a side of the second surface 112 can improve the heating effect on the glass 10.

Optionally, in the second heating source 312, a convective air outlet 3121 located between the first surface 111 and the first heating source 311 has a first convective opening. In the second heating source 312, a convective air outlet 3121 located on a side of the second surface 112 facing away from the first heating source 311 has a second convective opening. The second convective opening is greater than the first convective opening. In this embodiment, since the first heating source 311 is disposed on a side of the first surface 111, the heating effect on the second surface 112 can be improved by setting the second convective opening to be greater than the first convective opening, thereby balancing the heating effects on the first surface 111 and the second surface 112, so that the glass 10 is heated uniformly. Furthermore, the second heating source 312 may be configured to supply an air blast with a preset convective opening as needed in various areas according to different regional heating requirements.

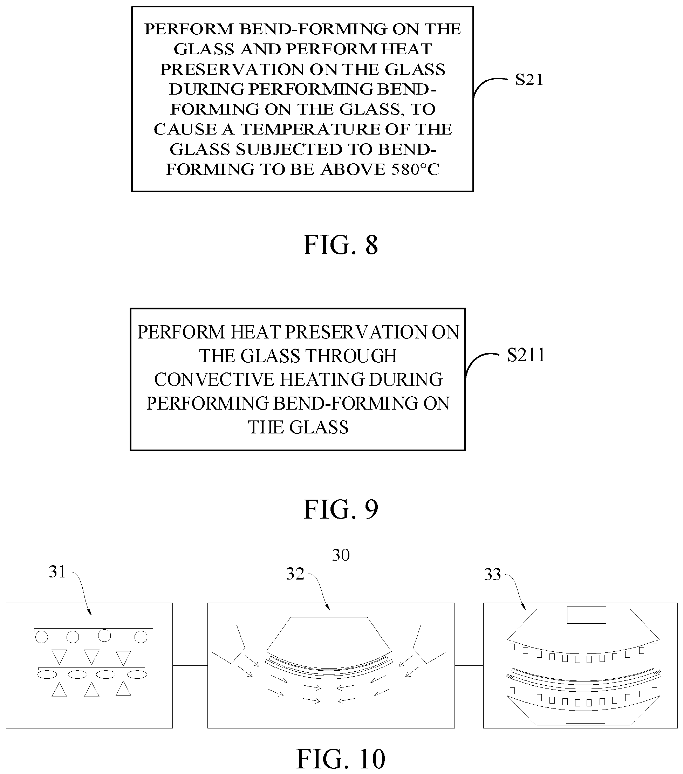

Reference is made to FIG. 3 and FIG. 8. FIG. 8 is a flowchart of performing bend-forming on the glass in FIG. 1. In this embodiment, the aforementioned operation at S20 includes an operation at S21, which is described in detail below.

At S21, perform bend-forming on the glass 10 and perform heat preservation on the glass 10 during performing bend-forming on the glass 10, to cause a temperature of the glass 10 subjected to bend-forming to be above 580°C.

In this embodiment, the glass 10 heated to the preset temperature is placed in a bend-forming apparatus 32, i.e., the glass 10 is placed between a convex mold and a concave mold of the bend-forming apparatus 32 for pressing.

In this embodiment, during performing bend-forming on the glass 10, a heat preservation and heating system 34 applies a hot air blast to the glass 10 to increase the temperature of the surroundings of the glass 10, thereby preventing the glass 10 from cooling too fast during performing bend-forming on the glass 10.

Reference is made to FIG. 3 and FIG. 9. FIG. 9 is a flowchart of applying a hot air blast to the glass in FIG. 8. In this embodiment, perform heat preservation on the glass 10 during performing bend-forming on the glass 10 in the aforementioned operation at S21 includes an operation at S211, which is described in detail below.

At S211, perform heat preservation on the glass 10 through convective heating during performing bend-forming on the glass 10.

In this embodiment, the heat preservation and heating system 34 is controlled to provide convective heating for heat preservation of the glass 10, and a temperature of the convective heating is greater than 400°C, so that the temperature of the glass 10 subjected to bend-forming can be maintained above 580°C. For example, the hot air blast output by the heat preservation and heating system 34 may be, but is not limited to, 400°C, 420°C, 440°C, 460°C, 480°C, 500°C, or another value greater than 400°C.

Specifically, the heat preservation and heating system 34 includes a third heating source and a fourth heating source. The third heating source is configured to perform convective heating on the glass 10, which can increase the temperature of the surroundings of the glass 10, thereby reducing the cooling rate of the glass 10. The fourth heating source applies hot air blast/provides heat radiation to the first surface 111, which can prevent the first surface 111 from cooling faster than the second surface 112 due to the presence of the infrared reflective film layer 12, thereby promoting uniform cooling of the entire glass 10.

The disclosure further provides the glass 10. Reference is again made to FIG. 5. In this embodiment, the glass 10 has the first surface 111 and the second surface 112 opposite to the first surface 111. The first surface 111 is provided with the infrared reflective film layer 12. The first surface 111 has the first surface compressive stress, and the second surface 112 has the second surface compressive stress. Both the first surface compressive stress and the second surface compressive stress are greater than or equal to 30MPa.

In this embodiment, the glass 10 is applied to a vehicle. For example, the glass 10 may be applied to, but is not limited to, a sunroof, a front windshield, a side window, or the like of the vehicle.

Further, the first surface compressive stress is greater than or equal to 34MPa, and the second surface compressive stress is greater than or equal to 34MPa.

Further, the first surface compressive stress is greater than or equal to 34.4MPa, and the second surface compressive stress is greater than or equal to 34.4MPa.

Further, the first surface compressive stress is greater than or equal to 40MPa, and the second surface compressive stress is greater than or equal to 40MPa.

In this embodiment, the first surface 111 is provided with the infrared reflective film layer 12, and the first surface 111 is referred to as a coated surface. The second surface 112 is not provided with an infrared reflective film layer, and the second surface 112 is referred to as a non-coated surface.

Optionally, a ratio of an absolute value of a difference between the first surface compressive stress and the second surface compressive stress to the first surface compressive stress is less than or equal to 5%.

Since the ratio of the absolute value of the difference between the first surface compressive stress and the second surface compressive stress to the first surface compressive stress is less than or equal to 5%, the surface compressive stress of the first surface 111 and the surface compressive stress of the second surface 112 are approximately the same, which is beneficial for improving the overall strength of the glass 10.

Further, the ratio of the absolute value of the difference between the first surface compressive stress and the second surface compressive stress to the first surface compressive stress is less than or equal to 4%, 3%, 2%, or 1%. Alternatively, the first surface compressive stress is equal to the second surface compressive stress.

Further, the glass 10 is a transparent glass or an ultra-transparent glass. The visible light transmittance of the glass 10 is in a range of 80% - 95%. The total iron content of the transparent glass is less than or equal to 0.1%, and the visible light transmittance of the transparent glass is greater than or equal to 80%. The total iron content of the ultra-transparent glass is less than or equal to 0.015%, and the visible light transmittance of the ultra-transparent glass is greater than or equal to 91%. The visible light transmittance of the glass 10 may be, but is not limited to, 88%, 89%, 90%, 91%, 92%, 93%, or another value within the range of 80% - 95%. Using a transparent glass or an ultra-transparent glass with a low total iron content may ensure that the overall visible light transmittance of the glass 10 coated with the infrared reflective film layer 12 may remain compliant with standards.

Further, the thickness of the glass 10 is in a range of 1.6mm - 4mm. The thickness of the glass 10 may specifically be 1.6mm, 2.0mm, 2.1mm, 2.4mm, 2.8mm, 3.2mm, 3.6mm, 4mm, or another value within the range of 1.6mm - 4mm.

The disclosure further provides a glass forming device 30. Reference is made to FIG. 2 - FIG. 4, and FIG. 10. FIG. 10 illustrates a glass forming device according to an embodiment of the disclosure. In this embodiment, the glass forming device 30 includes a heating apparatus 31, a bend-forming apparatus 32, and an air-cooling apparatus 33. The heating apparatus 31 is configured to performing heating on the glass 10. The bend-forming apparatus 32 is disposed downstream of the heating apparatus 31 and is configured to perform bend-forming on the glass 10. The air-cooling apparatus 33 is disposed downstream of the bend-forming apparatus 32 and is configured to perform air-quenching on the glass 10 to make both the surface compressive stress of the first surface 111 and the surface compressive stress of the second surface 112 greater than or equal to 30MPa. The air-cooling apparatus 33 is configured to apply an air blast to the first surface 111 and apply an air blast to the second surface 112 opposite to the first surface 111, and an air pressure of the air blast applied by the air-cooling apparatus 33 to the first surface 111 is lower than an air pressure of the air blast applied by the air-cooling apparatus 33 to the second surface 112.

In this embodiment, the glass forming device 30 is configured to perform heating, bend-forming, and cooling on the glass 10, so that both the surface compressive stress of the first surface 111 of the obtained glass 10 and the surface compressive stress of the second surface 112 of the obtained glass 10 are greater than or equal to 30MPa. This is beneficial for improving the overall strength of the glass 10 to meet customer requirements.

Optionally, the air-cooling apparatus 33 includes a first air grid 331 and a second air grid 332 spaced apart from and opposite to the first air grid 331. A gap between the first air grid 331 and the second air grid 332 is configured to accommodate the glass 10. The first air grid 331 is configured to apply a first air blast having a first air pressure to the first surface 111. The second air grid 332 is configured to apply a second air blast having a second air pressure to the second surface 112. A ratio of the first air pressure to the second air pressure is in a range of 1/1.3 - 1/3.

Optionally, a distance between the first air grid 331 and the first surface 111 is a first distance, and a distance between the second air grid 332 and the second surface 112 is a second distance. The first distance is greater than the second distance, so that the cooling rate of the first surface 111 and the cooling rate of the second surface 112 are further balanced, thereby further reducing or even eliminating the difference in surface compressive stress between the first surface 111 and the second surface 112 of the glass 10 subjected to cooling, and improving the surface strength of the glass 10 subjected to cooling.

Optionally, the first distance is in a range of 50mm - 80mm, and the second distance is in a range of 40mm - 60mm. For example, the first distance may be, but is not limited to, 50mm, 60mm, 70mm, 80mm, or another value within the range of 50mm - 80mm. The second distance may be, but is not limited to, 40mm, 45mm, 50mm, 60mm, or another value within the range of 40mm - 60mm.

Optionally, the heating apparatus 31 includes a heating furnace 313, a conveying apparatus 314, and a first heating source 311. The conveying apparatus 314 is disposed in the heating furnace 313 and is configured to carry the glass 10 for movement within the heating furnace 313. The first heating source 311 is disposed in the heating furnace 313 and is configured to perform radiant heating on the first surface 111 of the glass 10. And/or, the heating apparatus 31 further includes a second heating source 312. The second heating source 312 is disposed in the heating furnace 313 and is configured to perform convective heating on the first surface 111 and/or the second surface 112 of the glass 10. The first heating source 311 is a radiant heat source, which may specifically be an electric heating wire, and the first heating source 311 is configured to perform radiant heating on the first surface 111. The second heating source 312 is a convective heating apparatus, and the second heating source 312 is configured to perform convective heating on the first surface 111 and/or the second surface 112.

Optionally, the bend-forming apparatus 32 includes an upper forming mold 321 and a lower forming mold 322 opposite to the upper forming mold 321, and the glass 10 is bend-formed between the upper forming mold 321 and the lower forming mold 322. The bend-forming apparatus 32 further includes a heat preservation and heating system 34. The heat preservation and heating system 34 is configured to perform heat preservation and heating on the glass 10 located between the upper forming mold 321 and the lower forming mold 322, to cause a temperature of the glass 10 subjected to bend-forming to be above 580°C.

Specifically, the upper forming mold 321 and the lower forming mold 322 may be a convex mold and a concave mold, respectively. On a lower surface of the convex mold, a vacuum suction hole for glass suction may be defined, so as to assist in forming the glass 10. On a surface of the convex mold, a cavity may be defined, so as to facilitate press-forming on the glass 10 via high-pressure air. The concave mold may be a solid mold. A vacuum suction hole may be defined on an upper surface of the concave mold to assist in forming the glass 10. The concave mold may be a forming ring or the like. The glass 10 may be formed between the upper forming mold and the lower forming mold by one or a combination of gravity forming, press forming, or vacuum forming.

Further, the heat preservation and heating system 34 includes a third heating source 341. The third heating source 341 is disposed at an edge of the upper forming mold 321. The third heating source 341 is configured to perform convective heating on the glass 10 located between the upper forming mold 321 and the lower forming mold 322. A temperature of the convective heating is greater than or equal to 400°C.

### Embodiments

The glass 10 is prepared using the glass forming method provided in the above embodiments. The ratio of the first air pressure of the first air blast output by the first air grid 331 to the second air pressure of the second air blast output by the second air grid 332, and the resulting surface compressive stress strength of the obtained glass 10 are shown in the table below.

| | Ratio of the first air pressure to the second air pressure | Surface compressive stress (MPa) |
|---|---|---|
| Comparative embodiment 1 | 1:1 | 28 |
| Embodiment 1 | 1:1.3 | 34 |
| Embodiment 2 | 1:1.5 | 35 |
| Embodiment 3 | 1:1.8 | 38 |
| Embodiment | 1:2 | 42 |

| | | |
|---|---|---|
| 4 | | |
| Embodiment 5 | 1:2.5 | 44 |
| Embodiment 6 | 1:3 | 45 |
| Comparative embodiment 2 | 1:4 | Cracks |

As can be seen from the above table, in comparative embodiment 1, when the ratio of the first air pressure to the second air pressure is 1:1, the surface compressive stress of the glass 10 is 28MPa, which fails to meet the requirement that the surface compressive stress of the glass 10 needs to be greater than or equal to 34MPa. Furthermore, in comparative embodiment 2, when the ratio of the first air pressure to the second air pressure reached 1:4, cracking may occur in the glass 10.

In embodiments 1 - 6, when the ratio of the first air pressure to the second air pressure is 1:1.3, at least a portion of the glass 10 meets the requirement that the surface compressive stress is greater than or equal to 34MPa. When the ratio of the first air pressure to the second air pressure is 1:1.5, the surface compressive stress of the glass 10 reaches 35MPa. When the ratio of the first air pressure to the second air pressure is 1/2, the surface compressive stress of the glass 10 exceeds 40MPa. When the ratio of the first air pressure to the second air pressure is 1/3, the surface compressive stress of the glass 10 reaches 45MPa.

As demonstrated by the comparison between each embodiment and comparative embodiments in the table above, by controlling the ratio of the air pressure of the first air blast output by the first air grid 331 to the air pressure of the second air blast output by the second air grid 332, the surface compressive stress of the glass 10 can be enhanced, while avoiding an excessively large difference in air pressure and thereby avoiding cracking of the glass 10.

Furthermore, the glass 10 coated with the infrared reflective film layer 12 may exhibit superior infrared reflection performance compared with an ordinary glass not coated with the infrared reflective film layer 12. Moreover, laminating the glass 10 with an ordinary glass can form a laminated glass. The laminated glass includes the glass 10 coated with the infrared reflective film layer 12 and the ordinary glass. The infrared reflective film layer 12 is coated on a surface of the glass 10 facing away from the ordinary glass. The glass 10 is a transparent glass or ultra-transparent glass with a visible light transmittance greater than or equal to 80%. The glass 10 and the ordinary glass are bonded by polyvinyl butyral (PVB). The thickness of the glass 10 is 2.1mm, the thickness of the ordinary glass sheet is 2.1mm, and the thickness of the PVB is 0.76mm. The ordinary glass is an ordinary clear glass, a green glass, or a dark green glass.

Although the embodiments of the disclosure have been illustrated and described above, it may be understood that the foregoing embodiments are exemplary, and cannot be construed as limiting the disclosure. Those skilled in the art may make modifications, amendments, substitutions and variations to the above embodiments within the scope of the present disclosure, and these improvements and modifications also fall within the protection scope of the disclosure.

## Claims

1. A glass having a first surface and a second surface opposite to the first surface, wherein the first surface is provided with an infrared reflective film layer; and
wherein the first surface has a first surface compressive stress, the second surface has a second surface compressive stress, and both the first surface compressive stress and the second surface compressive stress are greater than or equal to 30MPa.

2. The glass according to claim 1, wherein the first surface compressive stress is greater than or equal to 34MPa, and the second surface compressive stress is greater than or equal to 34MPa.

3. The glass according to claim 1, wherein a ratio of an absolute value of a difference between the first surface compressive stress and the second surface compressive stress to the first surface compressive stress is less than or equal to 5%.

4. The glass according to claim 1, wherein the glass is a transparent glass or an ultra-transparent glass.

5. A glass forming method, wherein a glass has a first surface and a second surface opposite to the first surface, the first surface is provided with an infrared reflective film layer, and the glass forming method comprises:
performing heating on the glass;
performing bend-forming on the glass; and
performing air-quenching on the glass to make both a surface compressive stress of the first surface of the glass and a surface compressive stress of the second surface of the glass greater than or equal to 30MPa, wherein an air pressure of an air blast applied to a side of the first surface of the glass is lower than an air pressure of an air blast applied to a side of the second surface of the glass.

6. The glass forming method according to claim 5, wherein performing air-quenching on the glass to make both the surface compressive stress of the first surface of the glass and the surface compressive stress of the second surface of the glass greater than or equal to 30MPa comprises:
applying a first air blast having a first air pressure to the first surface; and
applying a second air blast having a second air pressure to the second surface;
wherein a ratio of the first air pressure to the second air pressure is in a range of 1/1.3 - 1/3.

7. The glass forming method according to claim 6, wherein the first air pressure is in a range of 2kPa - 8kPa, and the second air pressure is in a range of 2kPa - 8kPa.

8. The glass forming method according to claim 5, wherein performing heating on the glass comprises:
performing radiant heating on the first surface of the glass; and/or
performing convective heating on the first surface and/or the second surface of the glass.

9. The glass forming method according to claim 5, wherein performing bend-forming on the glass comprises:
performing bend-forming on the glass and performing heat preservation on the glass during performing bend-forming on the glass, to cause a temperature of the glass subjected to bend-forming to be above 580°C.

10. The glass forming method according to claim 9, wherein performing heat preservation on the glass during performing bend-forming on the glass comprises:
performing heat preservation on the glass through convective heating during performing bend-forming on the glass;
wherein a temperature of convective heating is greater than or equal to 400°C.

11. A glass forming device, comprising:
a heating apparatus configured to perform heating on a glass;
a bend-forming apparatus disposed downstream of the heating apparatus, wherein the bend-forming apparatus is configured to perform bend-forming on the glass; and
an air-cooling apparatus disposed downstream of the bend-forming apparatus, wherein the air-cooling apparatus is configured to perform air-quenching on the glass to make both a surface compressive stress of a first surface of the glass and a surface compressive stress of a second surface of the glass greater than or equal to 30MPa, wherein the air-cooling apparatus is configured to apply an air blast to the first surface and apply an air blast to the second surface opposite to the first surface, and an air pressure of the air blast applied by the air-cooling apparatus to the first surface is lower than an air pressure of the air blast applied by the air-cooling apparatus to the second surface.

12. The glass forming device according to claim 11, wherein the air-cooling apparatus comprises a first air grid and a second air grid spaced apart from and opposite to the first air grid, wherein a gap between the first air grid and the second air grid is configured to accommodate the glass, the first air grid is configured to apply a first air blast having a first air pressure to the first surface, the second air grid is configured to apply a second air blast having a second air pressure to the second surface, wherein a ratio of the first air pressure to the second air pressure is in a range of 1/1.3 - 1/3.

13. The glass forming device according to claim 12, wherein a distance between the first air grid and the first surface is a first distance, a distance between the second air grid and the second surface is a second distance, and the first distance is greater than the second distance.

14. The glass forming device according to claim 13, wherein the first distance is in a range of 50mm - 80mm, and the second distance is in a range of 40mm - 60mm.

15. The glass forming device according to claim 11, wherein the heating apparatus comprises a heating furnace, a conveying apparatus, and a first heating source, wherein the conveying apparatus is disposed in the heating furnace and is configured to carry the glass for movement within the heating furnace, the first heating source is disposed in the heating furnace and is configured to perform radiant heating on the first surface of the glass; and/or
the heating apparatus further comprises a second heating source, wherein the second heating source is disposed in the heating furnace and is configured to perform convective heating on the first surface and/or the second surface of the glass.

16. The glass forming device according to claim 11, wherein the bend-forming apparatus comprises an upper forming mold and a lower forming mold opposite to the upper forming mold, and the glass is bend-formed between the upper forming mold and the lower forming mold;
the bend-forming apparatus further comprises a heat preservation and heating system, wherein the heat preservation and heating system is configured to perform heat preservation and heating on the glass located between the upper forming mold and the lower forming mold, to cause a temperature of the glass subjected to bend-forming to be above 580°C.

17. The glass forming device according to claim 16, wherein the heat preservation and heating system comprises a third heating source, wherein the third heating source is disposed at an edge of the upper forming mold and is configured to perform convective heating on the glass located between the upper forming mold and the lower forming mold, and a temperature of the convective heating is greater than or equal to 400°C.
